# EUROPÄISCHE PATENTSCHRIFT

(11) **EP 1 788 918 B1**
(45) Veröffentlichungstag und Bekanntmachung des Hinweises auf die Patenterteilung: **26.11.2008**
(21) Anmeldenummer: 06704123.6
(22) Anmeldetag: 06.02.2006
(51) Int. Cl.: A47J 37/12

(54) **FRITTIERGERÄT**
DEEP FRYER
FRITEUSE

(30) Priorität: 24.03.2005 DE 102005013805
(43) Veröffentlichungstag der Anmeldung: 30.05.2007
(73) Patentinhaber: BSH Bosch und Siemens Hausgeräte GmbH, 81739 München (DE)
(72) Erfinder: MIKULIK, Frantisek, 75354 Zakovice 9 (CZ); MÜHLBACHER, Richard, 83224 Grassau (DE); SEDLAK, Josef, 53901 Hlinsko V Cechách (CZ); STEFFL, Michael, 83250 Marquartstein (DE)
(86) Internationale Anmeldenummer: PCT/EP2006/050678
(87) Internationale Veröffentlichungsnummer: WO 2006/100151

(56) Entgegenhaltungen:
- EP-A- 1 504 706
- US-A1- 2004 112 227
- US-B1- 6 365 878

## Beschreibung

Die Erfindung betrifft ein Frittiergerät, aufweisend einen ein Frittierbad aufnehmenden und beheizbaren Behälter, ein Gehäuse, eine Schnaupe zum Ausgießen des Frittierbads und einen Deckel zum Verschließen und Öffnen des Behälters.

Ein derartiges Frittiergerät mit einem eine Schnaupe umfassenden Gehäuse ist in der EP 1 224 896 A1 offenbart. Ein Nachteil dieser Schnaupe ist es, dass diese vom Gehäuse absteht und somit stören kann. EP 1504706 A offenbart auch ein solches Gerät.

Die Aufgabe der vorliegenden Erfindung ist es daher, ein Frittiergerät derart auszuführen, dass dessen Schnaupe zum Ausgießen des Frittierbads weniger stört.

Die Aufgabe der Erfindung wird gelöst durch ein Frittiergerät mit einem ein Frittierbad aufnehmenden und beheizbaren Behälter, einem Gehäuse, einer Schnaupe zum Ausgießen des Frittierbads und einem an dem Frittiergerät angelenkten Deckel zum Verschließen und Öffnen des Behälters, dadurch gekennzeichnet, dass das Frittiergerät im Bereich der Anlenkung des Deckels als die Schnaupe zum Ausgießen des Frittierbads ausgebildet ist. Dadurch, dass das Frittiergerät im Bereich, in dem der Deckel angelenkt ist, als Schnaupe ausgebildet ist, kann die Schnaupe, die bevorzugt an dem Gehäuse angeformt ist, derart ausgeführt werden, dass sie zumindest teilweise vom verschlossenen Deckel überdeckt wird und somit kaum störend in Erscheinung tritt.

Der Behälter kann am oberen Bereich am Gehäuse befestigt sein. Damit der im Betrieb erhitzte Behälter vom Gehäuse zumindest weitestgehend wärmeisoliert ist, umfasst das Gehäuse im oberen Bereich bevorzugt ein wärmeisolierendes Material bzw. umfasst das Gehäuse ein aus einem wärmeisolierenden Material gefertigtes Bauteil, das am oberen Bereich des restlichen Gehäuses befestigt ist. Die Schnaupe ist dann bevorzugt Teil dieses wärmeisolierenden Bauteils.

Nach einer bevorzugten Ausführungsform des erfindungsgemäßen Frittiergerätes ist der Deckel mittels eines Scharniers mit zwei Scharnieraufnehmer an dem Gehäuse angelenkt und die Schnaupe zwischen den beiden Scharnieraufnehmer ausgebildet. Somit ist es möglich, die beiden Scharnieraufnehmer in die Schnaupe zu integrieren, indem z.B. die nach innen gerichteten Seitenwände der Scharnieraufnehmer die Schnaupe begrenzen.

Gemäß einer weiteren Ausführungsform des erfindungsgemäßen Frittiergerätes sind die Schnaupe, der Behälter und/oder der Deckel derart ausgebildet, dass ein Ausgießen des Frittierbads über die Schnaupe bei geschlossenem Deckel verhindert wird. Diese Ausführungsform ist besonders vorteilhaft, wenn das Frittiergerät mit Frittierbad öfters bewegt wird und verhindert zudem auch ein ungewolltes Herausspritzen von Teilen des im Betrieb des Frittiergerätes erhitzen Frittierbades.

Für ein bequemeres Ausgießen des Frittierbades ist gemäß weiterer Ausführungsformen des erfindungsgemäßen Frittiergerätes der Deckel abnehmbar und/oder ist am Gehäuse des Frittiergerätes wenigstens ein Griff angeordnet. Der Griff ist bevorzugt als Mulde im Gehäuse des Frittiergerätes ausgebildet.

Ein Ausführungsbeispiel eines erfindungsgemäßen Frittiergerätes ist nachfolgend exemplarisch anhand der beigefügten Zeichnungen erklärt. Es zeigen:
- Fig. 1: Ein Frittiergerät mit geschlossenem Deckel,
- Fig. 2: das Frittiergerät mit geöffnetem Deckel
- Fig. 3: das Frittiergerät mit abgenommenem Deckel,
- Fig. 4: den abgenommen Deckel des Frittiergerätes
- Fig. 5: das Gehäuse des Frittiergerätes und
- Fig. 6: eine geschnittene Darstellung des Frittiergerätes mit abgenommenem Deckel.

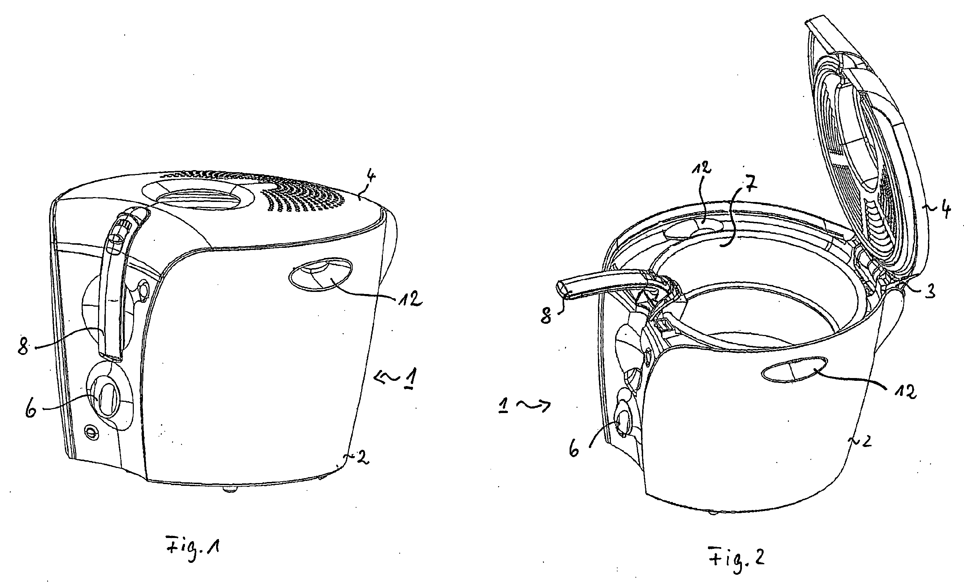

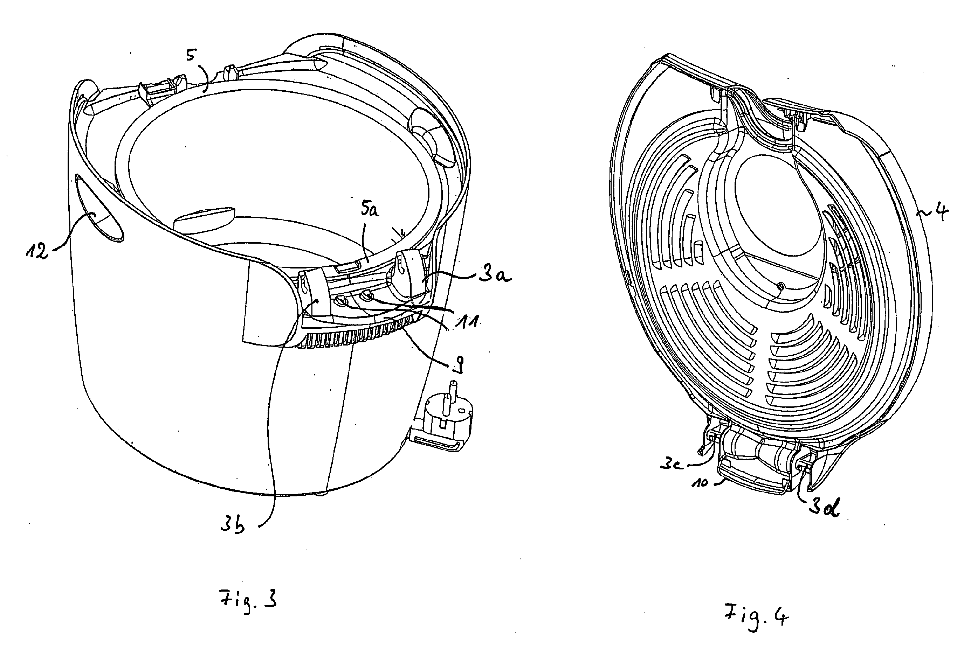

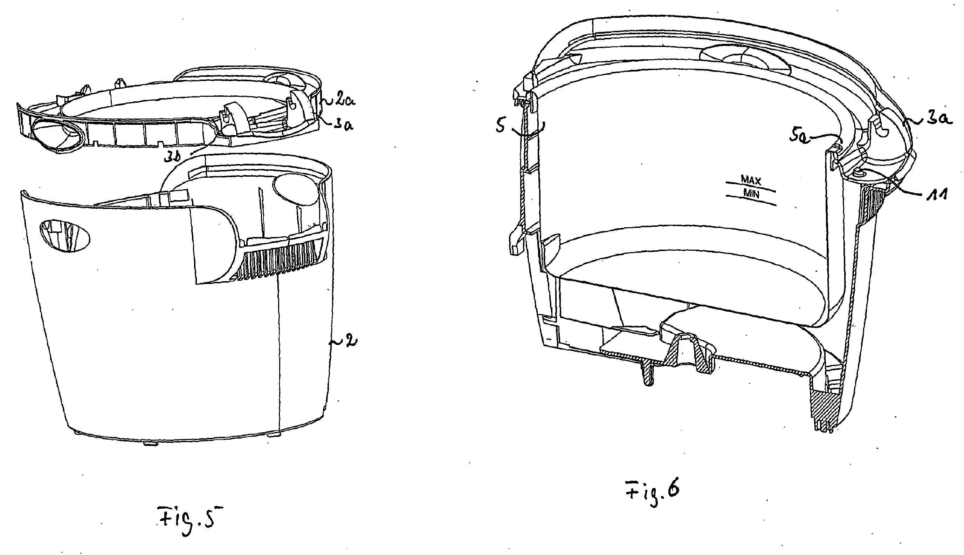

Die Figuren 1 bis 5 zeigen ein Frittiergerät 1 mit einem Gehäuse 2 aus Kunststoff und einem abnehmbaren, mittels eines an dem Gehäuse 2 angeformten Scharniers 3 schwenkbar angelenkten Deckel 4. Das Gehäuse 2 umfasst im Falle des vorliegenden Ausführungsbeispiels einen an seinem oberen Bereich aus einem wärmeisolierenden Material hergestellten Isolierring 2a. In der Figur 1 ist das Frittiergerät 1 mit geschlossenem, in der Figur 2 mit geöffnetem und in der Figur 3 mit abgenommenem Deckel 4 gezeigt. Die Figur 4 zeigt den abgenommenen Deckel 4, die Figur 5 verdeutlicht das Gehäuse 2 mit Isolierring 2a und die Figur 6 zeigt das Frittiergerät 1 mit abgenommenem Deckel in geschnittener Darstellung.

Das Frittiergerät 1 umfasst einen Topf 5 aus Metall, an dessen Boden eine nicht dargestellte, dem Fachmann jedoch allgemein bekannte Heizung befestigt ist. Mit der Heizung kann im Betrieb des Frittiergerätes 1 ein nicht näher dargestelltes Frittierbad, z.B. Speiseöl, erhitzt werden, um ein Frittiergut, beispielsweise Pommes Frites, zuzubereiten. Die Heizung wird im Betrieb über ein elektrisches Netz mit elektrischer Energie versorgt und mittels einer nicht näher dargestellten Steuerelektronik angesteuert. Die Temperatur des Frittierbad kann mit einem Drehknopf 6 eingestellt werden.

Im Falle des vorliegenden Ausführungsbeispiels umfasst das Frittiergerät 1 einen aus dem Topf 5 herausnehmbaren Korb 7 mit einem Griff 8. Während des Frittiervorgangs befindet sich der Korb 7 innerhalb des Topfes 5 und nimmt das Frittiergut auf. Der Korb 7 ist im Falle des vorliegenden Ausführungsbeispiels derart ausgeführt, dass er mittels des Griffs 8 und einer nicht näher dargestellten, jedoch prinzipiell u.a. aus der in der Einleitung genannten EP 1 224 896 A1 bekannten Vorrichtung zwischen einer Frittierposition und einer Abtropfposition bewegbar ist. Für die Frittierposition ist der Griff 8, wie in der Figur 1 dargestellt, nach unten geklappt und der Korb 7 befindet sich nahe genug am Boden des Topfes 5, so dass sich das im Korb 7 befindliche Frittiergut im Frittierbad befindet. Für die Abtropfposition wird der Griff 8 derart gedreht, so dass er, wie in der Figur 2 dargestellt, horizontal ausgerichtet ist. In der Abtropfposition befindet sich der Korb 7 zwar noch innerhalb des Topfes 5, ist jedoch vom Boden des Topfes 5 weit genug entfernt, so dass sich das Frittiergut nicht mehr im Frittierbad befindet und das Frittiergut abtropfen kann. Das abgetropfte Frittiergut kann dann mit dem Korb 7 aus dem Topf 5 herausgenommen werden.

Der Deckel 4 ist mit dem Scharnier 3 am Gehäuse 2 angelenkt. Für den Frittiervorgang verschließt der Deckel 4, wie in der Figur 1 dargestellt, das Gehäuse 2 und den Topf 5. Um den Korb 7 mit dem Frittiergut zu befüllen bzw. das Frittiergut zu entnehmen, wird der Deckel 4 derart geschwenkt, dass der Topf 5 zugänglich ist. Das Frittiergerät 1 mit geöffnetem Deckel 4 ist in der Figur 2 gezeigt. Des Weiteren kann im Falle des vorliegenden Ausführungsbeispiels der Deckel 4 vom Gehäuse 2 entfernt werden, wie dies in den Figuren 3 und 4 gezeigt ist.

Wie es aus der Figur 3 ersichtlich ist, umfasst das Scharnier 3 im Falle des vorliegenden Ausführungsbeispiels zwei am Gehäuse 2 bzw. am Isolierring 2a des Gehäuses 2 angeformte Scharnieraufnehmer 3a und 3b, die jeweils zwei am Deckel 4 (vgl. Fig. 4) angeordnete Scharnierstifte 3c und 3d aufnehmen können. Die Scharnieraufnehmer 3a und 3b sind nach oben geöffnet, damit der Deckel 4 von dem Gehäuse 2 entnommen werden kann.

Der Bereich des Gehäuses 2 zwischen den beiden Scharnieraufnehmern 3a und 3b ist wannenförmig ausgebildet und bildet zusammen mit den nach innen gerichteten Flächen der beiden Scharnieraufnehmern 3a und 3b eine Schnaupe 9 zum Ausgießen des Frittierbads. Wie es insbesondere in der Figur 5 dargestellt ist, verläuft der wannenförmige Bereich zwischen den beiden Scharnieraufnehmern 3a und 3b unterhalb des Randes 5a des Topfes 5.

Im Falle des vorliegenden Ausführungsbeispiels umfasst der Deckel 4 eine Drahtbügel 10, der in der Offenstellung des Deckels 4 mit an dem Gehäuse 2 im Bereich zwischen den beiden Scharnieraufnehmern 3a und 3b angeformten Erhebungen 11 derart zusammenwirkt, so dass der Deckel 4 in seiner Offenstellung im Wesentlichen vertikal ausgerichtet ist. Außerdem wird der Deckel 4 durch den Drahtbügel 10 und den Erhebungen 11 in seiner Offenstellung gehalten, wodurch ein unbeabsichtigtes selbsttätiges Schließen des Deckels 4 verhindert wird.

Im geschlossenen Zustand schließt im Falle des vorliegenden Ausführungsbeispiels der Deckel 4 den Rand 5a des Topfes 5 derart ab, dass auch bei gekipptem Frittiergerät 1 das Frittierbad nicht über die Schnaupe 9 fließen kann. Um das Frittiergerät 1 zum Ausgießen des Frittierbads leichter kippen zu können, sind im Falle des vorliegenden Ausführungsbeispiels in dem Gehäuse 2 zwei muldenförmige Griffe 12 eingefügt.

## Patentansprüche

1. Frittiergerät mit einem ein Frittierbad aufnehmenden und beheizbaren Behälter (5), einem Gehäuse (2, 2a), einer Schnaupe (8) zum Ausgießen des Frittierbads und einem an dem Frittiergerät (1) angelenkten Deckel (4) zum Verschließen und Öffnen des Behälters (5), **dadurch gekennzeichnet, dass** das Frittiergerät (1) im Bereich der Anlenkung des Deckels (4) als die Schnaupe (9) zum Ausgießen des Frittierbads ausgebildet ist.

2. Frittiergerät nach Anspruch 1, **dadurch gekennzeichnet, dass** das Gehäuse (2) ein an seinem oberen Bereich angeordnetes wärmeisolierendes Bauteil (2a) umfasst.

3. Frittiergerät nach Anspruch 1 oder 2, **dadurch gekennzeichnet, dass** die Schnaupe (9) an dem Gehäuse (2, 2a) angeformt ist.

4. Frittiergerät nach einem der Ansprüche 1 bis 3, **dadurch gekennzeichnet, dass** der Deckel (4) mittels eines Scharniers (3) mit zwei Scharnieraufnehmer (3a, 3b) an dem Gehäuse (2, 2a) angelenkt und die Schnaupe (9) zwischen den beiden Scharnieraufnehmer (3a, 3b) ausgebildet ist.

5. Frittiergerät nach einem der Ansprüche 1 bis 4, **dadurch gekennzeichnet, dass** die Schnaupe (9), der Deckel (4) und/oder der Behälter (5) derart ausgebildet sind, dass ein Ausgießen des Frittierbads über die Schnaupe (9) bei geschlossenem Deckel (4) verhindert wird.

6. Frittiergerät nach einem der Ansprüche 1 bis 5, **dadurch gekennzeichnet, dass** der Deckel (4) abnehmbar ist.

7. Frittiergerät nach einem der Ansprüche 1 bis 6, **dadurch gekennzeichnet, dass** an dem Gehäuse (2) des Frittiergerätes (1) wenigstens ein Griff (12) angeordnet ist.

## Claims

1. Fryer comprising a heatable container (5) receiving a frying bath, a housing (2, 2a), a spout (9) for pouring out the frying bath and a cover (4), which is articulated to the fryer (1), for closing and opening the container (5), **characterised in that** the fryer (1) is formed in the region of the articulation of the cover (4) as the spout (9) for pouring out the frying bath.

2. Fryer according to claim 1, **characterised in that** the housing (2) comprises a thermally insulating component (2a) arranged at its upper region.

3. Fryer according to claim 1 or 2, **characterised in that** the spout (9) is integrally formed at the housing (2, 2a).

4. Fryer according to any one of claims 1 to 3, **characterised in that** the cover (4) is articulated to the housing (2, 2a) by means of a hinge (3) with two hinge mounts (3a, 3b) and the spout (9) is formed between the two hinge mounts (3a, 3b).

5. Fryer according to any one of claims 1 to 4, **characterised in that** the spout (9), the cover (4) and/or the container (5) are constructed in such a manner that pouring out of the frying bath by way of the spout (9) when the cover (4) is closed is prevented.

6. Fryer according to any one of claims 1 to 5, **characterised in that** the cover (4) is removable.

7. Fryer according to any one of claims 1 to 6, **characterised in that** at least one handle (12) is arranged at the housing (2) of the fryer (1).

## Revendications

1. Friteuse comprenant un récipient (5) recevant un bain de friture et pouvant être chauffé, un boîtier (2, 2a), un bec (8) pour le déversement du bain de friture et un couvercle (4) articulé sur la friteuse (1) pour la fermeture et l'ouverture du récipient (5), **caractérisée en ce que** la friteuse (1) est conçue dans la zone de l'articulation du couvercle (4) sous la fome du bec (9) pour le déversement du bain de friture.

2. Friteuse selon la revendication 1, **caractérisée en ce que** le boîtier (2) comprend un élément (2a) thermoisolant disposé sur sa zone supérieure.

3. Friteuse selon la revendication 1 ou 2, **caractérisée en ce que** le bec (9) est formé sur le boîtier (2, 2a).

4. Friteuse selon l'une quelconque des revendications 1 à 3, **caractérisée en ce que** le couvercle (4) est articulé au moyen d'une charnière (3) avec deux récepteurs de charnière (3a, 3b) sur le boîtier (2, 2a) et le bec (9) est conçu entre les deux récepteurs de charnière (3a, 3b).

5. Friteuse selon l'une quelconque des revendications 1 à 4, **caractérisée en ce que** le bec (9), le couvercle (4) et/ou le récipient (5) sont conçus de telle sorte qu'un déversement du bain de friture est empêché par le bec (9) lorsque le couvercle (4) est fermé.

6. Friteuse selon l'une quelconque des revendications 1 à 5, **caractérisée en ce que** le couvercle (4) est amovible.

7. Friteuse selon l'une quelconque des revendications 1 à 6, **caractérisée en ce qu'**au moins une poignée (12) est disposée sur le boîtier (2) de la friteuse (1).
